# EUROPEAN PATENT SPECIFICATION

(11) **EP 3 641 018 B1**
(45) Date of publication and mention of the grant of the patent: **30.12.2020**
(21) Application number: 19216257.6
(22) Date of filing: 24.11.2017
(51) Int. Cl.: H01M 2/26, H01M 2/30, H01M 10/04

(54) **BATTERY CELL HAVING DUAL WELDING STRUCTURES**
BATTERIEZELLE MIT DOPPELSCHWEISSSTRUKTUREN
CELLULE DE BATTERIE COMPRENANT DES STRUCTURES DE SOUDAGE DOUBLES

(30) Priority: 30.11.2016 KR 20160161121
(43) Date of publication of application: 22.04.2020
(62) Document number(s) of the earlier application(s) in accordance with Art. 76 EPC: 17875721.7 / 3 396 738
(73) Proprietor: LG CHEM, LTD., Yeongdeungpo-gu, Seoul 07336 (KR)
(72) Inventor: PARK, Jong Pil, 34122 DAEJEON (KR)
(74) Representative: Plasseraud IP

(56) References cited:
- JP-A- 2013 168 238
- JP-U- S58 113 268

## Description

### Technical Field

The present disclosure relates to a battery cell having dual welding structures.

### Background Art

As the use of fossil fuels has rapidly increased, the demand for the use of alternative energy, or clean energy, has increased. As a part of this trend, the field where research has been most actively conducted is electrochemical-based power generation and storage.

At present, a typical example of an electrochemical device that utilizes electrochemical energy is a secondary battery, and the areas in which it is used are gradually increasing.

Battery cells may be classified, on the basis of the shape of a battery case, into a cylindrical battery configured to have a structure in which an electrode assembly is mounted in a cylindrical metal container, a prismatic battery configured to have a structure in which an electrode assembly is mounted in a prismatic metal container, and a pouch-shaped battery configured to have a structure in which an electrode assembly is mounted in a pouch-shaped case made of a laminated aluminum sheet.

An electrode assembly mounted in the battery case is a charge-dischargeable power generating device having a laminated structure of positive electrode/ separator/ negative electrode, and is classified into a jelly-roll type, in which long-sheet type positive electrodes and negative electrodes are wound while separators are interposed therebetween, and a stacked type, in which pluralities of positive electrodes and negative electrodes that each have a predetermined size are sequentially stacked while separators are interposed therebetween.

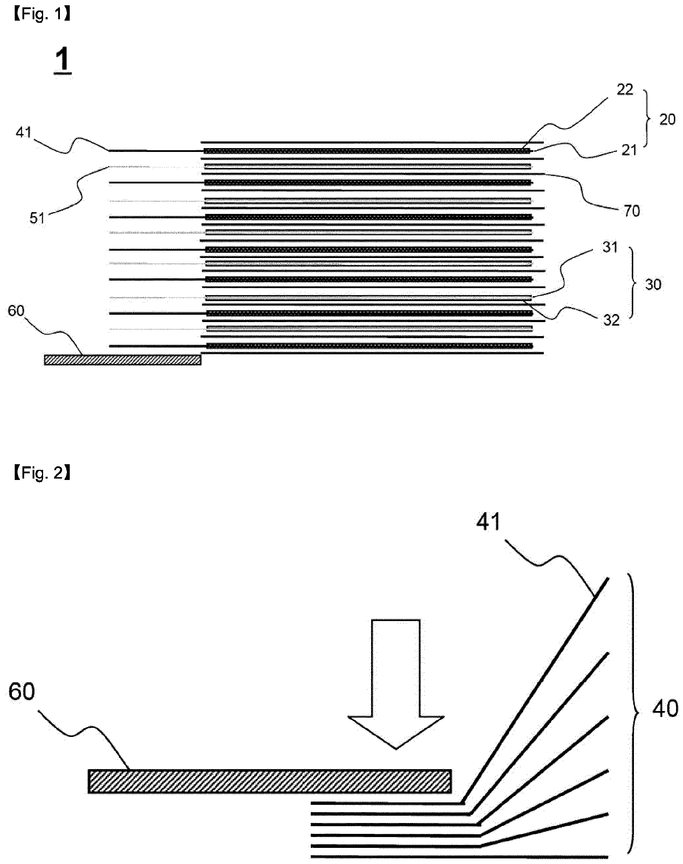

FIG. 1 schematically shows a side view of a general structure of a typical conventional stacked type electrode assembly.

Referring to FIG. 1, a stacked type electrode assembly 1 has a structure in which a positive electrode 20, on which a positive electrode active material 22 is applied on both surfaces of a positive electrode current collector 21, and a negative electrode 30, on which a negative electrode active material 32 is applied on both surfaces of a negative electrode current collector 31, are sequentially stacked with a separator interposed therebetween.

On one end of each of the positive electrode current collector 21 and the negative electrode current collector 31, a plurality of positive electrode tabs 41 and negative electrode tabs 51 that, in order to be respectively electrically connected to a positive electrode lead 60 and a negative electrode lead (not shown) constituting an electrode terminal of a battery, are not coated with the active material protrude.

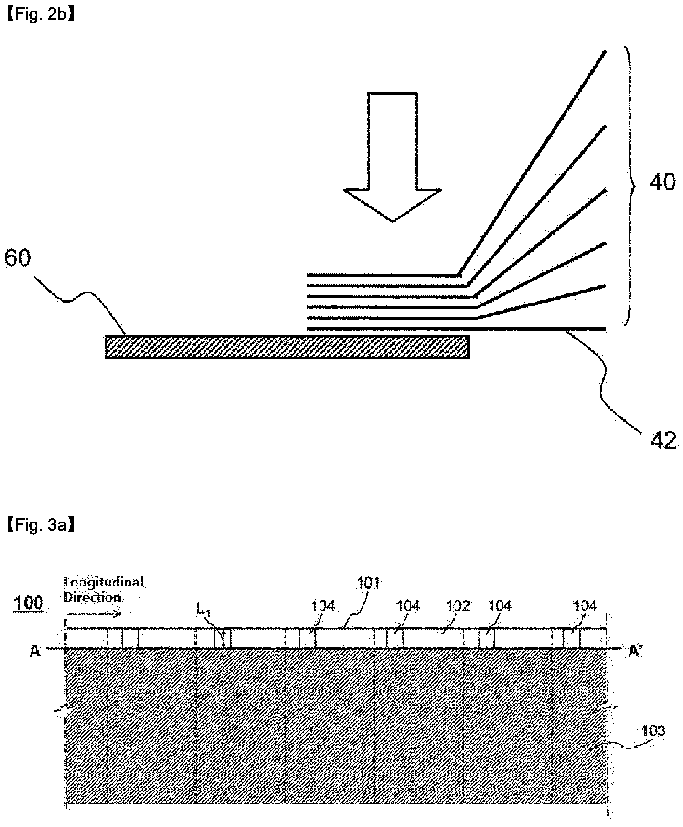

In particular, the positive electrode tabs 41 and the negative electrode tabs 51 are coupled to have a dense form and connected to the positive electrode lead 60 and the negative electrode lead, respectively. This structure may be more easily seen in FIGS. 2A and 2B in which a coupled part of the positive electrode tabs 41 and the positive electrode lead 60 is schematically shown in an enlarged partial view. For convenience of explanation, only the coupling structure of the positive electrode tabs and the positive electrode lead is shown in FIGS. 2A and 2B, but this structure is also employed in a coupled part of the negative electrode tabs and the negative electrode lead.

Referring to these drawings, the positive electrode tabs 40 make contact in a direction of an arrow and are connected to the positive electrode lead 60. The positive electrode lead 60 is generally coupled by welding, and may be coupled while in a state of being positioned on an upper surface of an uppermost positive electrode tab 41, as shown in FIG. 2A, or on a lower surface of a lowermost positive electrode tab 42, as shown in FIG. 2B.

However, in this structure, when a thickness of an electrode group is increased by increasing a number of times electrodes are stacked in order to increase energy density of the battery, the electrode tabs adjacent to an outermost area should be formed long enough to be coupled to the electrode lead. Therefore, an area of an electrode non-coated part used as the electrode tab may be increased, and an area coated with the electrode active material on an electrode current collector may be decreased, and thus a portion of the battery able to be utilized for battery capacity may be reduced.

In order to solve this problem, in a process of shortening a length of the electrode tab, and bending the electrode tabs and tightly joining them to an electrode tab junction, stress is concentrated on the outermost electrode tab with respect to the electrode lead, and thus a bonding force of the electrode tab junction may be weakened, the danger of disconnection may increase, and safety may be deteriorated.

Accordingly, there is a high need for a battery cell capable of improving the energy density of a battery by minimizing the length of an electrode tab, and at the same time, of maintaining a stable connection state between the electrode tab and the electrode lead.

The application JP 2013168238A relates to an electric power storage device that can prevent adhesion when the uncoated laminated parts are joined to the current collector.

The application JP S58113268A relates to coatings showing high storage stability and corrosion resistance.

### Disclosure

### Technical Problem

The present disclosure is provided to solve the above-described problems of the related art and technical problems that have been identified in the past.

The inventors of the present application have conducted intense research and various experiments and have confirmed that when electrode tab junctions formed on one side of each electrode group in a battery case are electrically connected to an electrode lead via a conductive connecting member, the electrode tab junction maintains a stable connection state with the electrode lead without disconnection, and the energy density is increased by increasing an area coated with an electrode active material in a process of minimizing the length of the electrode tab, thereby achieving the present disclosure.

### Technical Solution

The present invention is defined by the claims.

The present disclosure provides a battery cell including:
two or more electrode groups having a structure in which electrodes including a positive electrode, a negative electrode and a separator interposed between the positive electrode and the negative electrode are stacked, wherein each of the electrode groups includes an electrode tab junction on one side and is electrically connected to an electrode lead drawn to an outside of a battery case via a conductive connecting member, and has a structure including a first welding junction formed between one end of the conductive connecting member and the electrode tab junction and a second welding junction formed between the other end of the conductive connecting member and the electrode lead.

In particular, the first welding junction and the second welding junction may be formed parallel to the electrode lead, and the conductive connecting member may have a bent part bent toward an electrode body or an opposite direction thereof between the first welding junction and the second welding junction.

The conductive connecting member may be made of a metal strip, and the bent part may be, for example, bent so as to have a circular arc shape in a vertical cross section.

In one specific example, a battery cell includes two or more electrode groups having a structure in which electrodes including a positive electrode, a negative electrode, and a separator interposed between the positive electrode and the negative electrode are stacked, wherein each of the electrode groups includes an electrode tab junction on one side, and includes a first welding junction in which an end of the electrode tab junction is directly coupled to an electrode lead drawn to an outside of a battery case and a second welding in which an conductive connecting member is coupled at an opposite position of the first welding junction to the electrode tab junction and the electrode lead.

For example, the first welding junction may have a structure in which a part of the electrode tab junction is coupled to the electrode lead in a bent state, and a size of the second welding junction may be relatively larger than that of the first welding junction.

Optionally, the conductive connecting member may have a structure in which the second welding junction is formed to be in a bent state corresponding to the electrode tab junction and a shape of the outer surface of the electrode lead.

As described above, the electrode groups included in the battery cells having two structures may be composed of a first electrode group and a second electrode group; and the first electrode group and the second electrode group may be arranged symmetrically with respect to the electrode lead.

In particular, in the electrodes forming each of the electrode groups, bent angles of an electrode non-coated part extending from an end of an active material coated part to the electrode tab junction may be symmetrical with respect to a horizontal axis passing through the center of the electrode group.

For example, outermost electrodes of each of the electrode groups may have a bent angle of about 20 to 50 degrees, but the present disclosure is not limited thereto.

Optionally, a part of the electrode tab junction may be bent and coupled to the electrode lead in a state in which the bent angles of the electrode non-coated part are symmetrical with respect to the horizontal axis passing through the center of the electrode group.

Upper and lower surfaces of the electrode lead may have an insulating film attached thereto for securing electrical insulation in the battery case.

The electrode groups may be sealed together with an electrolytic solution within the battery case, which is made of a laminate sheet, and each of the electrode groups may have a stacked type electrode group and a stacked/folding type electrode group.

Further, the present disclosure includes a device including the battery cell as a power source.

The following items are described:
Item 1. A battery cell comprising:
   two or more electrode groups having a structure in which electrodes including a positive electrode, a negative electrode, and a separator interposed between the positive electrode and the negative electrode are stacked,
   wherein each of the electrode groups includes an electrode tab junction on one side and is electrically connected to an electrode lead drawn to an outside of a battery case via a conductive connecting member, and
   has a structure including a first welding junction formed between one end of the conductive connecting member and the electrode tab junction and a second welding junction formed between the other end of the conductive connecting member and the electrode lead.
Item 2. The battery cell of item 1, wherein the first welding junction and the second welding junction are formed parallel to the electrode lead.
Item 3. The battery cell of item 1, wherein the conductive connecting member has a bent part bent toward an electrode body or an opposite direction thereof between the first welding junction and the second welding junction.
Item 4. The battery cell of item 3, wherein the conductive connecting member is made of a metal strip, and the bent part is bent so as to have a circular arc shape in a vertical cross section.
Item 5. A battery cell comprising:
   two or more electrode groups having a structure in which electrodes including a positive electrode, a negative electrode, and a separator interposed between the positive electrode and the negative electrode are stacked,
   wherein each of the electrode groups includes an electrode tab junction on one side, and includes a first welding junction in which an end of the electrode tab junction is directly coupled to an electrode lead drawn to an outside of the battery case, and
   a second welding junction in which the conductive connecting member is coupled at an opposite position of the first welding junction to the electrode tab junction and the electrode lead.
Item 6. The battery cell of item 5, wherein the first welding junction has a structure in which a part of the electrode tab junction is coupled to the electrode lead in a bent state.
Item 7. The battery cell of item 5, wherein a size of the second welding junction is relatively larger than that of the first welding junction.
Item 8. The battery cell of item 5, wherein the conductive connecting member has a structure in which the second welding junction is formed to be in a bent state corresponding to the electrode tab junction and a shape of the outer surface of the electrode lead.
Item 9. The battery cell of any one of item 1 and item 5,
   wherein the electrode groups are composed of a first electrode group and a second electrode group, and
   the first electrode group and the second electrode group are arranged symmetrically with respect to the electrode lead.
Item 10. The battery cell of item 9, wherein, in the electrodes forming each of the electrode groups, bent angles of an electrode non-coated part extending from an end of an active material coated part to the electrode tab junction are symmetrical with respect to a horizontal axis passing through the center of the electrode group.
Item 11. The battery cell of item 10, wherein outermost electrodes of the electrode groups have a bent angle of about 20 to 50 degrees.
Item 12. The battery cell of item 10, wherein a part of the electrode tab junction is bent and coupled to the electrode lead in a state in which the bent angles of the electrode non-coated part are symmetrical with respect to the horizontal axis passing through the center of the electrode group.
Item 13. The battery cell of any one of item 1 and item 5, wherein upper and lower surfaces of the electrode lead have an insulating film attached thereto for securing electrical insulation in the battery case.
Item 14. The battery cell of any one of item1 and item 5, wherein the electrode group is sealed together with an electrolytic solution within the battery case, which is made of a laminate sheet.
Item 15. The battery cell of any one of item 1 and item 5, wherein each of the electrode groups has a stacked type electrode group and a stacked/folding type electrode group.
Item 16. A device comprising the battery cell of any one of item 1 and item 5 as a power source.

### Advantageous Effects

As described above, a battery cell according to the present disclosure have a structure in which an electrode tab junction formed on one side of each electrode group is electrically connected to an electrode lead via a conductive connecting member, and therefore it is possible to increase the energy density by shortening the length of the electrode tab and increasing the area coated with an electrode active material. Also, by preventing an electrode non-coated part from excessively bending for forming the electrode tab junction and relieving the stress acting on the electrode tab, a stable connection state of a tab-lead coupled part can be maintained and the safety of a battery can be secured.

### Brief Description of the Drawings

FIG. 1 is a schematic view of a typical structure of a conventional stacked type electrode assembly from a side view.
FIGS. 2A and 2B are enlarged views of a portion where positive tabs are coupled to have a dense form and connected to positive leads in the electrode assembly of FIG. 1.
FIG. 3A is a schematic view of a positive electrode prepared by applying a positive electrode active material to a positive electrode current collector included in an electrode group according to an embodiment of the present disclosure.
FIG. 3B is a schematic view of a positive electrode prepared by applying a positive electrode active material to a positive electrode current collector included in a battery cell according to the related art.
FIG. 4 is a schematic view of an inside of a battery cell according to an embodiment of the present disclosure, viewed from the side.
FIG. 5 is an enlarged partial view showing a state in which an electrode tab junction and a conductive connecting member of FIG. 4 are connected to each other.
FIG. 6 is an enlarged partial view of a first electrode group of FIG. 4.
FIG. 7 is a schematic view of an inside of a battery cell according to an embodiment of the present disclosure, viewed from the side.
FIG. 8 is an enlarged partial view showing a state in which an electrode tab junction and a conductive connecting member of FIG. 7 are connected to each other.

### Detailed Description of the Preferred Embodiments

Hereinafter, embodiments of the present disclosure will be described with reference to the accompanying drawings. However, the description provided herein is for better understanding of the present disclosure, and the scope of the present disclosure is not limited thereto.

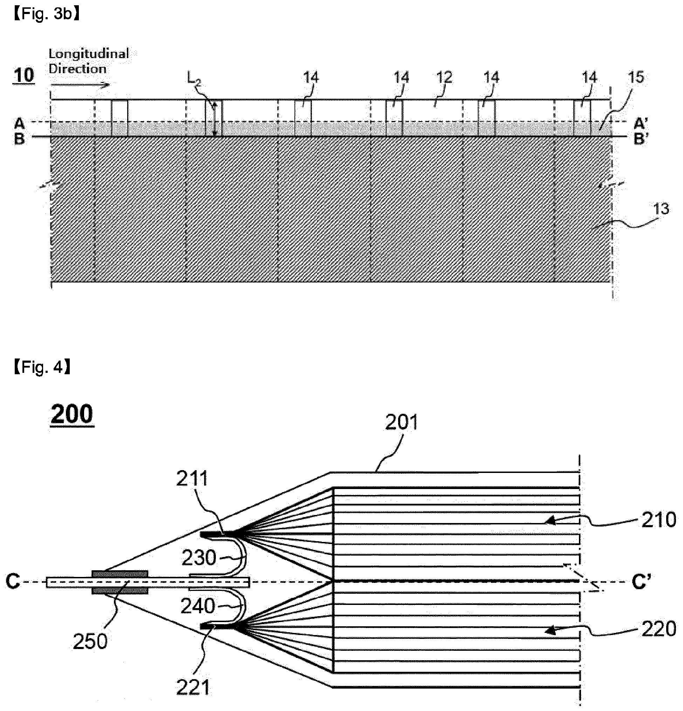

FIG. 3A illustrates a positive electrode prepared by applying a positive electrode active material to a positive electrode current collector included in an electrode group according to an embodiment of the present disclosure, and FIG. 3B illustrates a positive electrode prepared by applying a positive electrode active material to a positive electrode current collector included in a battery cell according to the related art.

Referring to FIG. 3A, a positive electrode 100 may be prepared by, in order for a non-coated part 102 to be formed in an upper portion adjacent to one end of a positive electrode current collector 101 in a longitudinal direction, applying a positive electrode active material 103 to a remaining portion so as to form a boundary (A-A') with the upper portion , and removing the remaining portions of the non-coated part 102, excluding a specific portion, by notching to form a positive electrode tab 104.

Referring to FIG. 3B, a positive electrode 10 may be prepared by, in order for a non-coated part 12 to be formed in an upper portion adjacent to one end of a positive electrode current collector 11 in a longitudinal direction, applying a positive electrode active material 13 to a remaining portion so as to form a boundary (B-B') with the upper portion, and removing the remaining portions of the non-coated part 12, excluding a specific portion, by notching to form a positive electrode tab 14.

The positive electrode 100 according to the present disclosure may be similar to and be prepared through the same process as the positive electrode 10 according to the related art. However, a length L₁ in which the positive electrode tab 104 protrudes upward may be shorter than a length L₂ of the positive electrode tab 14 of the related art, and an application area 103 of the positive electrode active material may be formed to be relatively larger than an application area 13 of the positive electrode active material of the related art.

That is, since the positive electrode 100 according to the present disclosure is connected to an electrode lead through a conductive connecting member as described below, the length of the positive electrode tab may not need to be as long as the conventional one. Therefore, the length of the positive electrode tab of the positive electrode according to the present disclosure may be shorter than that of the conventional one, and at the same time, the area to which the positive electrode active material is applied is relatively wider.

Only the positive electrode prepared by applying the positive electrode active material on the positive electrode current collector is shown in FIGS. 3A and 3B for the sake of convenience of explanation, but this structure may be also employed in a negative electrode prepared by applying a negative electrode active material on a negative electrode current collector, so that a battery cell prepared by stacking electrodes according to the present disclosure may have a relatively high energy density as compared with a battery cell of the same size.

This relative difference in energy density may be proportional to a difference 15 in the application area of the positive electrode active materials shown in FIGS. 3A and 3B, for example, an area 15 located between the boundary (A-A') and the boundary (B-B').

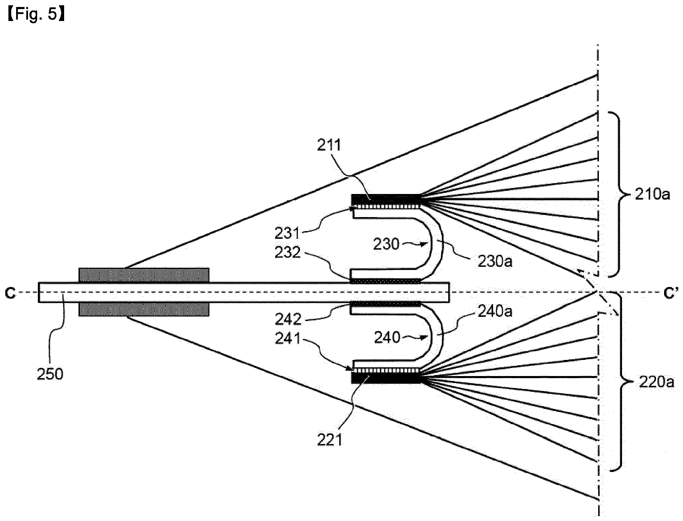

FIG. 4 is a schematic view of an inside of a battery cell according to an embodiment of the present disclosure, viewed from the side, and FIG. 5 is an enlarged partial view showing a state in which an electrode tab junction and a conductive connecting member of FIG. 4 are connected to each other.

FIG. 4 is centered on the tab-lead coupled part of the battery cell, and referring to FIG. 4, in a battery case 201 of a battery cell 200 according to the present disclosure, a first electrode group 210 and a second electrode group 220 each having a structure in which electrodes (not shown) having a positive electrode/separator /negative electrode structure are stacked in a direction perpendicular to the ground, electrode tab junctions 211 and 221 in which electrode tabs protruding in one direction from the respective electrode groups 210 and 220 are coupled to each other so as to have a dense form, conductive connecting members 230 and 240 interposed between the electrode tab junctions 211 and 221 and an electrode lead 250, and the electrode lead 250 of which one end is connected to the conductive connecting members 230 and 240 and the other end is led out to the outside of the battery case 201 may all be included.

Referring to FIG. 4 and FIG. 5 together, the electrode tab junction 211 in which the electrode tabs 210a protruding from the first electrode group 210 in one direction are connected in a dense form and the electrode tab junction 221 in which the electrode tabs 220a protruding from the second electrode group 220 in one direction are connected in a dense form may be formed.

The conductive connecting members 230 and 240 located between the electrode tab junctions 211 and 221 and the electrode lead 250 may include first welding junctions 231 and 241 having one ends respectively welded to the electrode tab junctions 211 and 221 and second welding junctions 232 and 242 having the other ends welded to the electrode lead 250.

The first welding junctions 231 and 241 may be formed in parallel to the longitudinal direction of the electrode tab junctions 211 and 221, and the second welding junctions 232 and 242 may be formed in parallel to the longitudinal direction of the electrode lead 250. The parts 230a and 240a of the conductive connecting members 230 and 240 located between the first welding junctions 231 and 241 and the second welding junctions 232 and 242 may have a shape bent in a direction toward the electrode bodies 210 and 220 where the electrode tabs 210a and 220a are located, for example, a vertical cross sectional shape of a circular arc. However, the battery cell 200 according to the present disclosure is not limited to a structure in which a bent direction is directed toward the electrode bodies 210 and 220, but includes a structure that is bent to the opposite side of the electrode bodies 210 and 220.

The first electrode group 210 and the second electrode group 220 may be symmetrically formed with the longitudinal direction of the electrode lead 250 as a center axis C-C'.

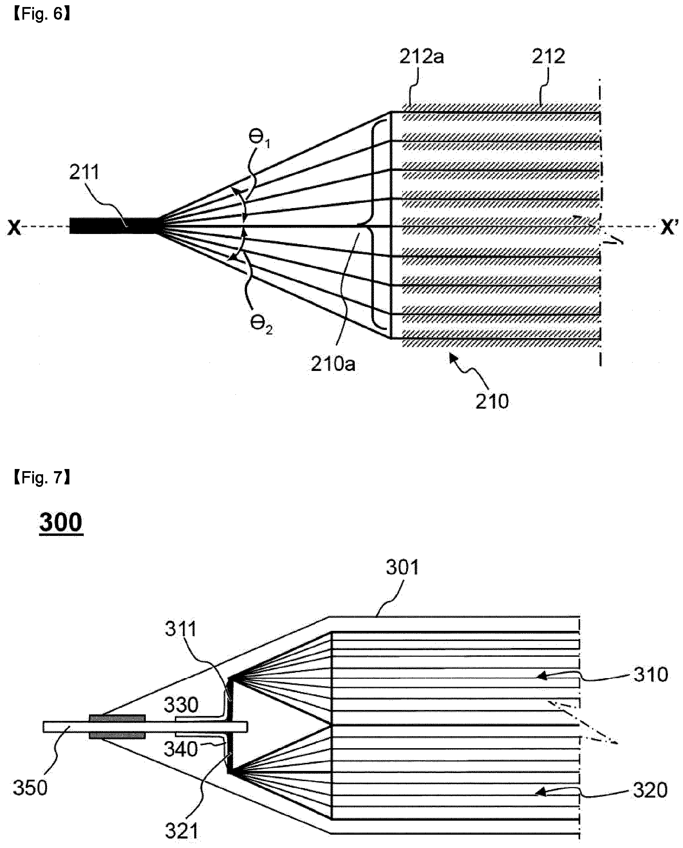

FIG. 6 is an enlarged partial view of the first electrode group of FIG. 4.

A plurality of electrodes included in the first electrode group 210 may include electrode non-coated parts 210a reaching an active material coated part 212 and the electrode tab junction 211, and the electrode non-coated parts 210a have a symmetrical structure with respect to a horizontal axis X-X' passing through the center of the first electrode group 210.

An angle formed with the horizontal axis X-X' by an outermost electrode non-coated part located on the upper side and an outermost electrode non-coated part located on the lower side with respect to the horizontal axis X-X' may be respectively θ₁ and θ₂, and θ₁ and θ₂ are the same angle as each other.

Although only the angles formed by the outermost electrode non-coated parts are shown in FIG. 6, the electrode non-coated parts 210a may have a symmetrical structure with respect to the horizontal axis X-X' passing through the center of the first electrode group 210, and therefore, the electrode non-coated parts located between the outermost electrode non-coated part on the upper side and the horizontal axis X-X' and the electrode non-coated parts located between the outermost electrode non-coated part on the lower side and the horizontal axis X-X' may have the same angle with respect to the horizontal axis X-X'.

With such a structure, since the angle of the electrode non-coated part bent to form the electrode tab may be constant, in contrast to the related art, the electrode non-coated part does not bend so drastically so as to reach the electrode lead, so that excessive stress may be prevented from acting on the electrode tab portion. Also, it possible to prevent the stress from acting unbalanced because the electrode non-coated parts are formed in a symmetrical structure.

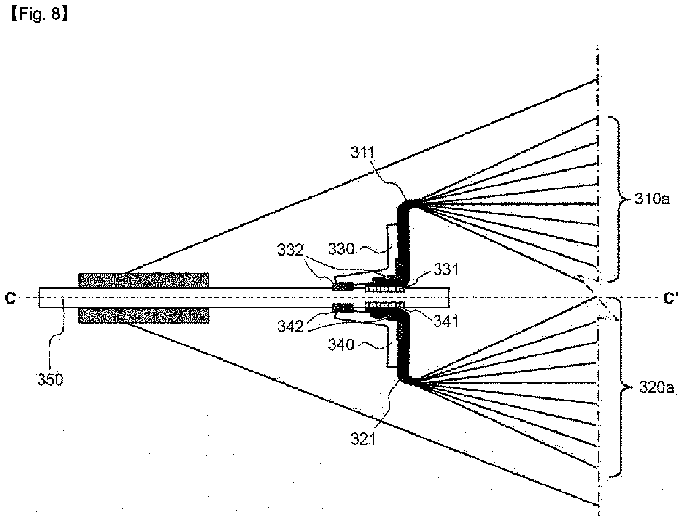

FIG. 7 is a perspective view of a battery cell according to an embodiment of the present disclosure, viewed from the side, and FIG. 8 is an enlarged partial view showing a state in which an electrode tab junction and a conductive connecting member included in the battery cell of FIG. 7 are connected to each other.

Referring to FIG. 7, in a battery case 301 of a battery cell 300 according to an embodiment of the present disclosure, a first electrode group 310 and a second electrode group 320, electrode tab junctions 311 and 321 in which electrode tabs protruding in one direction from the each of the electrode groups 310 and 320 are coupled in a dense form, conductive connecting members 330 and 340 interposed between the electrode tab junctions 311 and 321 and an electrode lead 350, and the electrode lead 350 of which one end 350a is connected to the conductive connecting members 330 and 340 and the other end is led out to the outside of the battery case 301 may all be included, and only a portion of the battery cell 300 is shown.

Referring to FIGS. 6 and FIG. 7 together, the electrode tab junction 311 in which electrode tabs 310a protruding from the first electrode group 310 in one direction are connected in a dense form and the electrode tab junction 321 in which electrode tabs 320a protruding from the second electrode group 320 in one direction are connected in a dense form may be formed on one side of the battery cell 300.

One ends of the electrode tab junctions 311 and 321 may include first welding junctions 331 and 341 formed by being directly coupled to one end of the electrode lead and second welding junctions 332 and 342 in which the conductive connecting members 330 and 340 located on the opposite side of the first welding junctions 331 and 341 are respectively coupled to the electrode tab junctions 311 and 321 and the electrode lead 350.

One ends of the electrode tab junctions 311 and 321 located adjacent to the electrode lead 350 may be coupled to the electrode lead 350 by welding in a partially bent state to form the first welding junctions 331 and 341.

Since the conductive connecting members 330 and 340 are respectively coupled to the electrode lead 350 and the electrode tab junctions 311 and 321, the second welding junctions 332 and 342 may be relatively larger than the first welding junctions 331 and 341 and may be bent to correspond to a shape of the outer surface of the electrode tab junctions 311 and 321 and the electrode lead 350.

The first electrode group 310 and the second electrode group 320 may be formed symmetrically with the longitudinal direction of the electrode lead 350 as a center axis C-C'.

## Claims

1. A battery cell (200, 300) comprising:
two or more electrode groups (210, 310, 320) having a structure in which electrodes including a positive electrode (10, 100), a negative electrode, and a separator interposed between the positive electrode (10, 100) and the negative electrode are stacked,
wherein each of the electrode groups (210, 310, 320) includes an electrode tab junction (211, 221, 311, 321) on one side, and includes a first welding junction (231, 241, 331, 341) in which an end of the electrode tab junction (211, 221, 311, 321) is directly coupled to an electrode lead (250, 350) drawn to an outside of the battery case (201, 301), and
wherein a conductive connecting member (230, 240, 330, 340) is coupled to the electrode lead (250, 350) and the electrode tab junction (211, 221, 311, 321) at the opposite surface of the first welding junction (231, 241, 331, 341) by a second welding junction (232, 242, 332, 342),
the first welding junction (231, 241, 331, 341) having a structure in which a part of the electrode tab junction (211, 221, 311, 321) is coupled to the electrode lead (250, 350) in a bent state,
the conductive connecting member (230, 240, 330, 340) having a structure in which the second welding junction (232, 242, 332, 342) is formed to be in a bent state corresponding to the electrode tab junction (211, 221, 311, 321) and a shape of the outer surface of the electrode lead (250, 350),
the electrode groups being composed of a first electrode group (210, 310, 320) and a second electrode group (220, 320),
the first electrode group and the second electrode group being arranged symmetrically with respect to the electrode lead (250, 350), and
in the electrodes forming each of the electrode groups, bent angles of an electrode non-coated part extending from an end of an active material coated part (212) to the electrode tab junction (211, 221, 311, 321) being symmetrical with respect to a horizontal axis passing through the center of the electrode group (210, 310, 320).

2. The battery cell (200, 300) of claim 1, wherein a size of the second welding junction (232, 242, 332, 342) is relatively larger than that of the first welding junction (231, 241, 331, 341).

3. The battery cell (200, 300) of claim 1 or 2, wherein outermost electrodes of the electrode groups have a bent angle of about 20 to 50 degrees.

4. The battery cell (200, 300) of any one of claims 1 to 3, wherein a part of the electrode tab junction (211, 221, 311, 321) is bent and coupled to the electrode lead (250, 350) in a state in which the bent angles of the electrode non-coated part are symmetrical with respect to the horizontal axis passing through the center of the electrode group (210, 310, 320).

5. The battery cell (200, 300) of any one of claims 1, to 4 wherein upper and lower surfaces of the electrode lead (250, 350) have an insulating film attached thereto for securing electrical insulation in the battery case (201, 301).

6. The battery cell (200, 300) of any one of claims 1 to 5, wherein the electrode group is sealed together with an electrolytic solution within the battery case (201, 301), which is made of a laminate sheet.

7. The battery cell (200, 300) of any one of claims 1 to 6, wherein each of the electrode groups (210, 310, 320) has a stacked type electrode group and a stacked/folding type electrode group (210, 310, 320).

8. A device comprising the battery cell (200, 300) of any one of claims 1 to 7 as a power source.

## Patentansprüche

1. Batteriezelle (200, 300), umfassend:
zwei oder mehr Elektrodengruppen (210, 310, 320), welche eine Struktur aufweisen, in welcher Elektroden gestapelt sind, welche eine positive Elektrode (10, 100), eine negative Elektrode und einen zwischen der positiven Elektrode (10, 100) und der negativen Elektrode eingefügten Separator umfassen,
wobei jede der Elektrodengruppen (210, 310, 320) an einer Seite eine Elektrodenzungenverbindung (211, 221, 311, 321) umfasst und eine erste Schweißverbindung (231, 241, 331, 341) umfasst, an welcher ein Ende der Elektrodenzungenverbindung (211, 221, 311, 321) direkt mit einer Elektrodenleitung (250, 350) gekoppelt ist, welche zu einer Außenseite des Batteriegehäuses (201, 301) gezogen ist, und
wobei ein leitfähiges Verbindungselement (230, 240, 330, 340) an der der ersten Schweißverbindung (231, 241, 331, 341) entgegengesetzten Fläche durch eine zweite Schweißverbindung (232, 242, 332, 342) mit der Elektrodenleitung (250, 350) und der Elektrodenzungenverbindung (211, 221, 311, 321) gekoppelt ist,
wobei die erste Schweißverbindung (231, 241, 331, 341) eine Struktur aufweist, in welcher ein Teil der Elektrodenzungenverbindung (211, 221, 311, 321) in einem gebogenen Zustand mit der Elektrodenleitung (250, 350) gekoppelt ist,
wobei das leitfähige Verbindungselement (230, 240, 330, 340) eine Struktur aufweist, in welcher die zweite Schweißverbindung (232, 242, 332, 342) derart gebildet ist, dass sie entsprechend der Elektrodenzungenverbindung (211, 221, 311, 321) und einer Form der äußeren Fläche der Elektrodenleitung (250, 350) in einem gebogenen Zustand vorliegt,
wobei die Elektrodengruppen aus einer ersten Elektrodengruppe (210, 310, 320) und einer zweiten Elektrodengruppe (220, 320) zusammengesetzt sind,
wobei die erste Elektrodengruppe und die zweite Elektrodengruppe in Bezug auf die Elektrodenleitung (250, 350) symmetrisch angeordnet sind und
wobei, bei den Elektroden, welche jede der Elektrodengruppen bilden, gebogene Winkel eines nicht beschichteten Teils der Elektrode, welcher sich von einem Ende eines beschichteten Teils eines aktiven Materials (212) zu der Elektrodenzungenverbindung (211, 221, 311, 321) erstreckt, in Bezug auf eine horizontale Achse symmetrisch sind, welche durch die Mitte der Elektrodengruppe (210, 310, 320) verläuft.

2. Batteriezelle (200, 300) nach Anspruch 1, wobei eine Größe der zweiten Schweißverbindung (232, 242, 332, 342) relativ größer als die der ersten Schweißverbindung (231, 241, 331, 341) ist.

3. Batteriezelle (200, 300) nach Anspruch 1 oder 2, wobei äußerste Elektroden der Elektrodengruppen einen gebogenen Winkel von etwa 20 bis 50 Grad aufweisen.

4. Batteriezelle (200, 300) nach einem der Ansprüche 1 bis 3, wobei ein Teil der Elektrodenzungenverbindung (211, 221, 311, 321) gebogen ist und in einem Zustand mit der Elektrodenleitung (250, 350) gekoppelt ist, in welchem die gebogenen Winkel des nicht beschichteten Teils der Elektrode in Bezug auf die horizontale Achse symmetrisch sind, welche durch die Mitte der Elektrodengruppe (210, 310, 320) verläuft.

5. Batteriezelle (200, 300) nach einem der Ansprüche 1 bis 4, wobei obere und untere Flächen der Elektrodenleitung (250, 350) einen daran angebrachten Isolierfilm zum Sichern einer elektrischen Isolierung in dem Batteriegehäuse (201, 301) aufweisen.

6. Batteriezelle (200, 300) nach einem der Ansprüche 1 bis 5, wobei die Elektrodengruppe mit einer Elektrolytlösung innerhalb des Batteriegehäuses (201, 301) versiegelt ist, welche aus einer Laminatfolie hergestellt ist.

7. Batteriezelle (200, 300) nach einem der Ansprüche 1 bis 6, wobei jede der Elektrodengruppen (210, 310, 320) eine Elektrodengruppe eines gestapelten Typs und eine Elektrodengruppe (210, 310, 320) eines gestapelten/gefalteten Typs aufweist.

8. Vorrichtung, umfassend die Batteriezelle (200, 300) nach einem der Ansprüche 1 bis 7 als eine Energiequelle.

## Revendications

1. Cellule de batterie (200, 300) comprenant :
deux groupes d'électrodes (210, 310, 320) ou plus présentant une structure dans laquelle des électrodes comportant une électrode positive (10, 100), une électrode négative et un séparateur interposé entre l'électrode positive (10, 100) et l'électrode négative sont empilées,
dans laquelle chacun des groupes d'électrodes (210, 310, 320) comporte une jonction de languette d'électrode (211, 221, 311, 321) sur un côté, et comporte une première jonction de soudage (231, 241, 331, 341) dans laquelle une extrémité de la jonction de languette d'électrode (211, 221, 311, 321) est directement couplée à un fil d'électrode (250, 350) tiré vers un extérieur du boîtier de batterie (201, 301), et
dans laquelle un élément de connexion conducteur (230, 240, 330, 340) est couplé au fil d'électrode (250, 350) et à la jonction de languette d'électrode (211, 221, 311, 321) au niveau de la surface opposée de la première jonction de soudage (231, 241, 331, 341) par une seconde jonction de soudage (232, 242, 332, 342),
la première jonction de soudage (231, 241, 331, 341) présentant une structure dans laquelle une partie de la jonction de languette d'électrode (211, 221, 311, 321) est couplée au fil d'électrode (250, 350) dans un état courbé,
l'élément de connexion conducteur (230, 240, 330, 340) présentant une structure dans laquelle la seconde jonction de soudage (232, 242, 332, 342) est formée pour être dans un état courbé correspondant à la jonction de languette d'électrode (211, 221, 311, 321) et une forme de la surface extérieure du fil d'électrode (250, 350),
les groupes d'électrodes étant composés d'un premier groupe d'électrodes (210, 310, 320) et d'un second groupe d'électrodes (220, 320),
le premier groupe d'électrodes et le second groupe d'électrodes étant agencés de façon symétrique par rapport au fil d'électrode (250, 350), et
dans les électrodes formant chacun des groupes d'électrodes, des angles courbés d'une partie non revêtue d'électrode s'étendant depuis une extrémité d'une partie revêtue de matériau actif (212) vers la jonction de languette d'électrode (211, 221, 311, 321) étant symétriques par rapport à un axe horizontal traversant le centre du groupe d'électrodes (210, 310, 320).

2. Cellule de batterie (200, 300) selon la revendication 1, dans laquelle une taille de la seconde jonction de soudage (232, 242, 332, 342) est relativement plus grande que celle de la première jonction de soudage (231, 241, 331, 341).

3. Cellule de batterie (200, 300) selon la revendication 1 ou 2, dans laquelle des électrodes les plus extérieures des groupes d'électrodes présentent un angle courbé d'environ 20 à 50 degrés.

4. Cellule de batterie (200, 300) selon l'une quelconque des revendications 1 à 3, dans laquelle une partie de la jonction de languette d'électrode (211, 221, 311, 321) est courbée et couplée au fil d'électrode (250, 350) dans un état dans lequel les angles courbés de la partie non revêtue d'électrode sont symétriques par rapport à l'axe horizontal traversant le centre du groupe d'électrodes (210, 310, 320).

5. Cellule de batterie (200, 300) selon l'une quelconque des revendications 1 à 4, dans laquelle des surfaces supérieure et inférieure du fil d'électrode (250, 350) présentent un film isolant attaché à celles-ci pour assurer l'isolation électrique dans le boîtier de batterie (201, 301).

6. Cellule de batterie (200, 300) selon l'une quelconque des revendications 1 à 5, dans laquelle le groupe d'électrodes est scellé avec une solution électrolytique dans le boîtier de batterie (201, 301), qui est composé d'une feuille stratifiée.

7. Cellule de batterie (200, 300) selon l'une quelconque des revendications 1 à 6, dans laquelle chacun des groupes d'électrodes (210, 310, 320) comporte un groupe d'électrodes de type empilées et un groupe d'électrodes (210, 310, 320) de type empilées/pliantes.

8. Dispositif comprenant la cellule de batterie (200, 300) selon l'une quelconque des revendications 1 à 7 en tant que source d'alimentation.
